# EUROPEAN PATENT APPLICATION

(11) **EP 2 696 164 A1**
(43) Date of publication of application: **12.02.2014**
(21) Application number: 11854535.9
(22) Date of filing: 16.09.2011
(51) Int. Cl.: G01B 11/00, G01B 11/26

(54) **THREE-DIMENSIONAL POSITION/POSTURE RECOGNITION DEVICE, THREE-DIMENSIONAL POSITION/POSTURE RECOGNITION METHOD, AND THREE-DIMENSIONAL POSITION/POSTURE RECOGNITION PROGRAM**

(30) Priority: 24.03.2011 JP 2011065227
(71) Applicant: Dainippon Screen Mfg. Co., Ltd., Kyoto-shi, Kyoto 602-8585 (JP)
(72) Inventor: ONISHI Hiroyuki, Kyoto-shi, Kyoto 602-8585 (JP)
(74) Representative: Kilian Kilian & Partner
(86) International application number: PCT/JP2011/071220
(87) International publication number: WO 2012/127714

(57) **Abstract**

An objective of the present invention is to provide a three-dimensional position/attitude recognition apparatus, a three-dimensional position/attitude recognition method, and a three-dimensional position/attitude recognition program, that can perform three-dimensional position/attitude recognition on an object by analyzing an image of an edge portion with a simple configuration. A three-dimensional position/attitude recognition apparatus according to the present invention includes: detection means 4 for detecting an edge direction of an object 1 by analyzing an image element of an object 1 in at least one of first and second images that have been captured; determination means 5 for determining whether or not to change relative positions of the object 1 and at least one of first and second image capturing means 2 and 3 based on a result of the detection; and movement means 6 for moving at least one of the first and second image capturing means 2 and 3 relative to the object 1.

## Description

### TECHNICAL FIELD

The present invention relates to a three-dimensional position/attitude recognition apparatus, a three-dimensional position/attitude recognition method, and a three-dimensional position/attitude recognition program, and particularly to capturing of an image suitable for a three-dimensional position/attitude recognition.

### BACKGROUND ART

In a case of assembling, for example, a component part of a precision machine by using an industrial robot, it is necessary to recognize a three-dimensional position/attitude of this component part and perform a picking operation and the like. Here, the three-dimensional position/attitude is defined as a pair of coordinate values including at least one (typically, both) of a spatial position and a spatial attitude of an object. In this case, for example, a three-dimensional position/attitude recognition process is performed on the component part to be assembled, by using a three-dimensional measuring instrument that captures an image of the component part and processes the image by a stereo method, an optical cutting method, or the like.

Conventionally, to enhance the accuracy of the three-dimensional position/attitude recognition, for example, as disclosed in Patent Document 1, a measurement method is changed in accordance with an identified component part or the like (object), or as disclosed in Patent Document 2, a polygonal marking having no rotational symmetry is attached to a component part or the like (object) and image capturing is performed a plurality of times.

### PRIOR-ART DOCUMENTS

### PATENT DOCUMENTS

Patent Document 1: Japanese Patent Application Laid-Open No. 7-98217 (1995)
Patent Document 2: Japanese Patent Application Laid-Open No. 2010-112729

### SUMMARY OF THE INVENTION

### PROBLEMS TO BE SOLVED BY THE INVENTION

In a stereo matching method that can be used in a simple manner at a relatively low cost, corresponding points in left and right captured images are obtained, and based on information of the disparity thereof, a distance is calculated. In a case of using the stereo matching, two cameras or the like are used as image capturing means to capture images, and an image analysis is performed on, for example, an edge portion of an object. However, there is a problem that in a case where an edge (hereinafter, a parallel edge) extending in parallel with a disparity direction on the respective images is contained in the object, the accuracy of the stereo matching is deteriorated in this parallel edge portion. Herein, the disparity direction on the image is a direction extending along a component obtained by projecting an axis (hereinafter, referred to as a disparity direction axis), which passes through the position where one of the cameras is located and the position where the other of the cameras is located, onto the left and right images.

To obtain the corresponding points in the left and right images, firstly, an image correction is performed in consideration of a lens distortion between the left and right images, inclinations of the camera, and the like. Then, a height direction on the image that is perpendicular to the disparity direction on the above-mentioned image is defined, and searching is performed, along the disparity direction on the image, with respect to images within the same block range in the height direction. In this searching, points at which the degree of matching between the images within the block range is high are defined as the corresponding points. Accordingly, if there is a parallel edge extending along the disparity direction on the image, points having similar matching degrees sequentially exists in a linear manner, and therefore one appropriate point where the matching degree is increased cannot be identified, thus causing the aforesaid problem.

In a case where there is a texture or the like on a surface of the object, this texture portion may be used to identify the corresponding points, but in many cases, there is not such a texture in an object. Thus, it has been necessary to appropriately obtain corresponding points while using the edge portion.

This problem may be solved by increasing the number of cameras used for the image capturing. However, the increase in the number of cameras makes image processing, and the like, more complicated, and moreover requires an increased processing time. Additionally, the cost for the apparatus is also increased. Thus, this is not preferable.

The present invention has been made to solve the problems described above, and an objective of the present invention is to provide a three-dimensional position/attitude recognition apparatus, a three-dimensional position/attitude recognition method, and a three-dimensional position/attitude recognition program, that can perform three-dimensional position/attitude recognition on an object by analyzing an image of an edge portion with a simple configuration.

### MEANS FOR SOLVING THE PROBLEMS

A three-dimensional position/attitude recognition apparatus according to the invention of claim 1 includes: first and second image capturing means for capturing images of an object; detection means for detecting an edge direction of the object by analyzing an image element of the object in at least one of a first image captured by the first image capturing means and a second image captured by the second image capturing means; determination means for determining whether or not to change relative positions of the object and at least one of the first and second image capturing means, based on a result of the detection by the detection means; and movement means for, in a case where the determination means determines to change the relative positions, moving at least one of the first and second image capturing means relative to the object. In a case where the relative movement is performed, the first and second image capturing means re-capture images of the object, and update at least one of the first and second images. The three-dimensional position/attitude recognition apparatus further includes recognition means for performing a three-dimensional position/attitude recognition process on the object based on the first and second images.

The invention of claim 2 is the three-dimensional position/attitude recognition apparatus according to claim 1, wherein: a direction extending along a component obtained by projecting a disparity direction axis onto the first or second image is defined as a disparity direction on the image, the disparity direction axis passing through a position where the first image capturing means is located and a position where the second image capturing means is located; and the determination means determines whether or not to change the relative positions of the object and at least one of the first and second image capturing means, based on the degree of parallelism between the detected edge direction and the disparity direction on the image.

The invention of claim 3 is the three-dimensional position/attitude recognition apparatus according to claim 2, wherein: in a case where the ratio of the number of the edges considered to be in parallel with the disparity direction on the image to the total number of edges is equal to or greater than a threshold; and the determination means determines to change the relative positions of the object and at least one of the first and second image capturing means.

The invention of claim 4 is the three-dimensional position/attitude recognition apparatus according to claim 2 or 3, wherein: in a case where the ratio of the total length of the edges considered, based on a predetermined criterion, to be in parallel with the disparity direction on the image to the total length of all edges is equal to or greater than a threshold; and the determination means determines to change the relative positions of the object and at least one of the first and second image capturing means.

The invention of claim 5 is the three-dimensional position/attitude recognition apparatus according to any one of claims 2 to 4, wherein the movement means moves at least one of the first and second image capturing means in a direction including a direction component that is perpendicular to at least one of optical axes of the first and second image capturing means and is also perpendicular to the disparity direction axis.

The invention of claim 6 is the three-dimensional position/attitude recognition apparatus according to claim 5, wherein the movement means rotatably moves both of the first and second image capturing means around a central optical axis extending along a bisector of an angle formed between the optical axes of the first and second image capturing means.

The invention of claim 7 is the three-dimensional position/attitude recognition apparatus according to any one of claims 2 to 4, wherein the movement means rotatably moves the object around a central optical axis extending along a bisector of an angle formed between optical axes of the first and second image capturing means.

The invention of claim 8 is a three-dimensional position/attitude recognition apparatus including: image capturing means for capturing an image of an object; movement position selection means for detecting an edge direction of the object by analyzing an image element of the object in a first image captured by the image capturing means, and selecting an intended movement position to which the image capturing means is to be moved; and movement means for moving the image capturing means to the intended movement position. After the movement made by the movement means, the image capturing means re-captures an image of the object as a second image. The three-dimensional position/attitude recognition apparatus further includes recognition means for performing a three-dimensional position/attitude recognition process on the object based on the first and second images.

The invention of claim 9 is the three-dimensional position/attitude recognition apparatus according to claim 8, wherein: a direction extending along a component obtained by projecting an intended disparity direction axis onto the first image is defined as an intended disparity direction on the image, the intended disparity direction axis passing through a position where the image capturing means is located before the movement and a position where the image capturing means is located after the movement; and the movement position selection means selects an intended movement position to which the image capturing means is to be moved, based on the degree of parallelism between the detected edge direction and the intended disparity direction on the image.

The invention of claim 10 is the three-dimensional position/attitude recognition apparatus according to claim 9, wherein the movement position selection means selects, as the intended movement position to which the image capturing means is to be moved, such a position that the ratio of the number of the edges considered to be in parallel with the intended disparity direction on the image to the total number of edges is less than a threshold.

The invention of claim 11 is the three-dimensional position/attitude recognition apparatus according to claim 9 or 10, wherein the movement position selection means selects, as the intended movement position to which the image capturing means is to be moved, such a position that the ratio of the total length of the edges considered to be in parallel with the intended disparity direction on the image to the total length of all edges is less than a threshold.

The invention of claim 12 is the three-dimensional position/attitude recognition apparatus according to any one of claims 1 to 11, wherein the recognition means performs stereo matching based on the edges of the object in the first and second images, and performs a three-dimensional position/attitude recognition process on the object.

The invention of claim 13 is a three-dimensional position/attitude recognition program installed in a computer and, when executed, causing the computer to function as the three-dimensional position/attitude recognition apparatus according to any one of claims 1 to 12.

The invention of claim 14 is a three-dimensional position/attitude recognition method including the steps of: (a) capturing images of an object from a first position and a second position different from each other; (b) detecting an edge direction of the object by analyzing an image element of the object in at least one of a first image captured at the first position and a second image captured at the second position; (c) determining whether or not to change relative positions of the object and at least one of the first and second positions, based on a result of the detection in the step (b); (d) in a case where a result of the determination in the step (c) is that the relative positions need to be moved, moving the relative positions; (e) in a case where the relative positions are moved, re-capturing images of the object from the first and the second positions obtained after the movement of the relative positions, and updating at least one of the first and second images; and (f) performing a three-dimensional position/attitude recognition process on the object based on the first and second images.

The invention of claim 15 is the three-dimensional position/attitude recognition method according to claim 14, wherein: a direction extending along a component obtained by projecting a disparity direction axis onto the first or second image is defined as a disparity direction on the image, the disparity direction axis passing through the first position and the second position; and the step (c) is a step of determining whether or not to change the relative positions based on the degree of parallelism between the detected edge direction and the disparity direction on the image.

The invention of claim 16 is the three-dimensional position/attitude recognition method according to claim 14 or 15, wherein the capturing of the images at the first and second positions is performed by first and second image capturing means, respectively.

The invention of claim 17 is the three-dimensional position/attitude recognition method according to claim 14 or 15, wherein the capturing of the images at the first and second positions is time-lag image capturing that is performed by moving single image capturing means.

### EFFECTS OF THE INVENTION

In any of the inventions of claims 1 to 17, on the image obtained by image capturing, the edge direction of the object is determined, and in accordance with the edge direction, whether the obtained image is used without any change or an image should be re-captured after changing the relative positions of the object and a image capturing position, is determined. Therefore, left and right images suitable for matching can be obtained in accordance with the relationship between the edge direction and a direction in which the image capturing is originally performed. Thus, the three-dimensional position/attitude recognition on the object can be efficiently performed.

Particularly in the invention of claim 2, the determination means determines whether or not to change the relative positions of the object and at least one of the first and second image capturing means, based on the degree of parallelism between the detected edge direction and the disparity direction on the image. This can suppress detection of an edge that is considered to be a parallel edge. Thus, the three-dimensional position/attitude recognition process can be performed by using an edge that is not considered to be in parallel with the disparity direction on the image. Therefore, the efficiency of the three-dimensional position/attitude recognition is improved.

Particularly in the invention of claim 5, the movement means moves at least one of the first and second image capturing means in the direction including the direction component that is perpendicular to at least one of the optical axes of the first and second image capturing means and is also perpendicular to the disparity direction axis. Thereby, the disparity direction on the image that is the component obtained by projecting the disparity direction axis can be rotated on the first image and the second image, and the parallel edge on the image can be changed into an edge that is not considered to be parallel. Thus, in the stereo matching, misrecognized corresponding points on the parallel edge can be appropriated recognized.

The invention of claims 8 includes: the movement position selection means for detecting the edge direction of the object by analyzing the object in the captured first image, and selecting the intended movement position to which the image capturing means is to be moved; and the movement means for moving the image capturing means to the intended movement position. After being moved by the movement means, the image capturing means re-captures an image of the object as the second image. Thereby, even with one image capturing means, the position where the image capturing means is located at the time of capturing the second image can be selected in accordance with the detected edge direction of the object, and left and right images suitable for matching can be obtained. Therefore, by analyzing the edge portion, the three-dimensional position/attitude recognition on the object can be efficiently performed.

Particularly in the invention of claim 9, the movement position selection means selects the intended movement position to which the image capturing means is to be moved, based on the degree of parallelism between the detected edge direction and the intended disparity direction on the image. This can suppress detection of the parallel edge after the movement, and the three-dimensional position/attitude recognition process can be performed by using an edge that is not considered to be in parallel with the disparity direction on the image. Therefore, the efficiency of the three-dimensional position/attitude recognition is improved.

These and other objects, features, aspects and advantages of the present invention will become more apparent from the following detailed description of the present invention when taken in conjunction with the accompanying drawings.

### BRIEF DESCRIPTION OF THE DRAWINGS

[FIG. 1] A function block diagram of a three-dimensional position/attitude recognition apparatus according to a first embodiment.
[FIG. 2] A diagram showing a configuration of the three-dimensional position/attitude recognition apparatus according to the first embodiment.
[FIG. 3] A flowchart showing an operation of the three-dimensional position/attitude recognition apparatus according to the first embodiment.
[FIG. 4] A diagram for explaining the operation of the three-dimensional position/attitude recognition apparatus according to the first embodiment.
[FIG. 5] A diagram for explaining the operation of the three-dimensional position/attitude recognition apparatus according to the first embodiment.
[FIG. 6] A function block diagram of a three-dimensional position/attitude recognition apparatus according to a second embodiment.
[FIG. 7] A diagram showing a configuration of the three-dimensional position/attitude recognition apparatus according to the second embodiment.
[FIG. 8] A flowchart showing an operation of the three-dimensional position/attitude recognition apparatus according to the second embodiment.
[FIG. 9] A diagram showing an example of a three-dimensional position/attitude recognition process.
[FIG. 10] A diagram showing an example of the three-dimensional position/attitude recognition process.

### EMBODIMENT FOR CARRYING OUT THE INVENTION

### <A. First Embodiment >

### <A-1. Underlying Technique>

Firstly, as an underlying technique of the present invention, an example case where a three-dimensional position/attitude recognition process is performed by stereo matching will be described below.

As described above, a problem involved in performing stereo matching is whether or not an object I whose images are captured as left and right images to be used for matching includes a parallel edge.

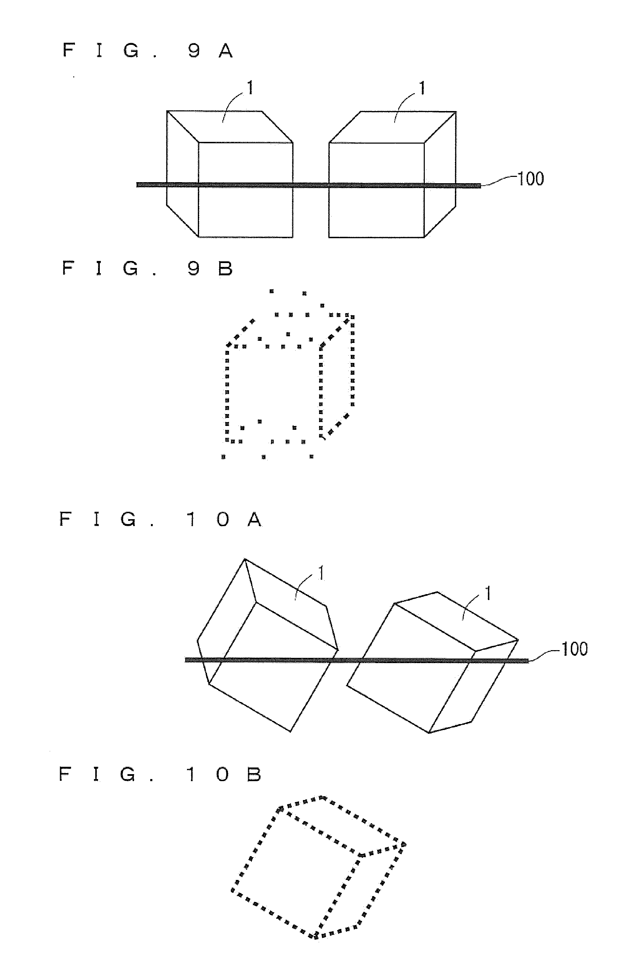

That is, as shown in FIG. 9(a), in a case of using left and right images of the object 1 including a parallel edge that is in parallel with a disparity direction 100 on the image, a group of measurement points corresponding to the parallel edge are scattered away from their original positions, as shown in FIG. 9(b). Thus, corresponding points are not correctly be recognized. This group of misrecognized measurement points cause a noise, which consequently increases a probability of failing in matching with a three-dimensional model.

On the other hand, as shown in FIG. 10(a), in a case of using left and right images of the object 1 including no parallel edge, scattering of a group of measurement points as shown in FIG. 9(b) does not occur, and corresponding points are appropriately recognized (see FIG. 10(b)). Therefore, a probability of succeeding in the matching with the three-dimensional model is increased.

Accordingly, in order to appropriately perform the stereo matching and recognize a three-dimensional position/attitude of the object 1, it is necessary to obtain left and right images with no parallel edge included therein, and appropriately recognize corresponding points. Therefore, three-dimensional position/attitude recognition apparatus, method, and program, that can solve the problem, will be described below.

### <A-2. Configuration>

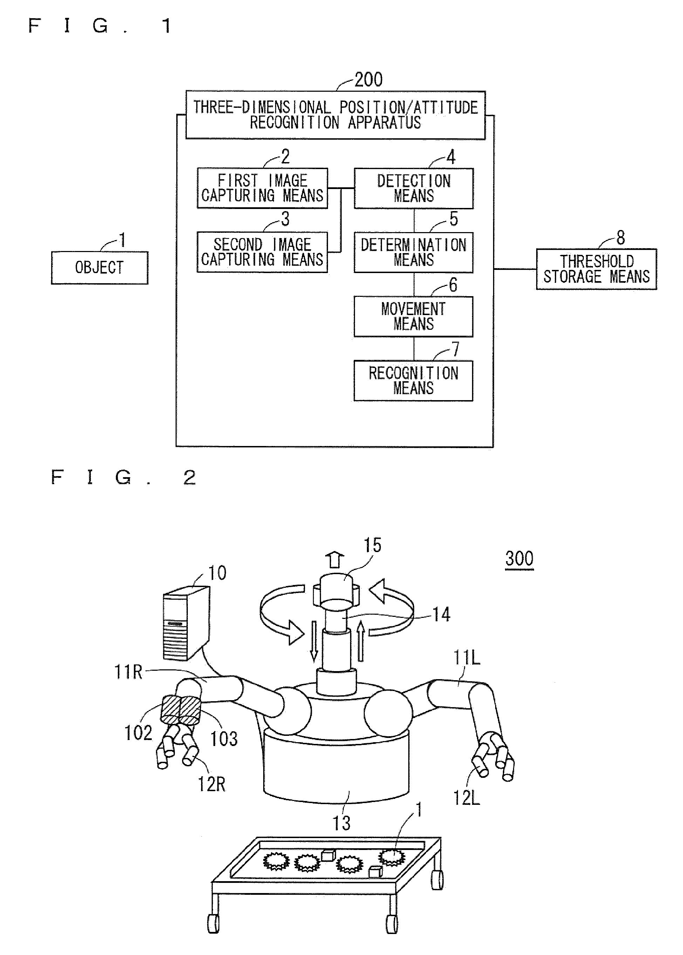

FIG. 1 is a block diagram showing a configuration of a three-dimensional position/attitude recognition apparatus according to the present invention. As shown in FIG. 1, a three-dimensional position/attitude recognition apparatus 200 includes first image capturing means 2 and second image capturing means 3 for capturing an image of the object 1, and detection means 4 for obtaining a first image captured by the first image capturing means 2 and a second image captured by the second image capturing means 3, and detecting a parallel edge. Either of the first image and the second image can be used for detecting the parallel edge.

Moreover, the three-dimensional position/attitude recognition apparatus 200 includes determination means 5, movement means 6, and recognition means 7. The determination means 5 determines, based on a result of the detection by the detection means 4, whether or not to change relative positions of the object 1 and either one of the first image capturing means 2 and the second image capturing means 3. The movement means 6 moves the object 1 or at least either one of the first image capturing means 2 and the second image capturing means 3, that is, moves at least one of the first image capturing means 2 and the second image capturing means 3 relative to the object 1. The recognition means 7 performs a three-dimensional position/attitude recognition process on the object 1 based on the first image and the second image.

The first image capturing means 2 and the second image capturing means 3 are, specifically, implemented by a stereo camera or the like, and capture images of the object 1 from different directions.

The detection means 4 detects a parallel edge that is considered to be in parallel with a disparity direction on the image, by analyzing an image element of the object 1 in the left and right images, that is, in the first image and the second image described above. Here, it is not necessary that the parallel edge is strictly in parallel with the disparity direction on the image, but the concept thereof includes an edge whose direction has such a degree of parallelism that influences the recognition of corresponding points. A range that influences the recognition of corresponding points is determined by, for example, preliminarily obtaining corresponding points on the edge in various angular directions by actual measurement or simulation and setting, as that range, an angular range in which the number of misrecognitions increases. This angular range is set as the threshold of the degree of parallelism. In determining the threshold of the degree of parallelism, it is desirable to consider the image quality, the resolution, the correction error in a case of making a parallelized image, and the like, of a camera. A user may arbitrarily set the threshold of the degree of parallelism.

The threshold of the degree of parallelism can be stored in threshold storage means 8, and the detection means 4 can refer to it when detecting the edge direction to detect the parallel edge.

When corresponding points cannot be appropriately recognized based on the result of the detection of the parallel edge by the detection means 4, the determination means 5 determines to change relative positions of the object 1 and either one of the first image capturing means 2 and the second image capturing means 3.

In determining whether or not corresponding points can be appropriately recognized, the determination means 5 can refer to a recognition threshold that has been set in advance based on an experimental result and the like and stored in the threshold storage means 8. The recognition threshold is, for example, data of the ratio of the number of parallel edges to the total number of edges of the object 1, or data of the ratio of the total length of parallel edges to the total length of all edges. The recognition threshold is an upper limit value beyond which the frequency of the failure in matching increases. Setting of the recognition threshold can be made by, for example, preliminarily performing a matching process for matching with the three-dimensional model using parallel edges having various ratios, various total lengths, and the like, and setting, as the threshold, the ratio, the total length, or the like, of the parallel edges in which the frequency of the failure in matching increases.

The above-described threshold storage means 8 may be provided in the three-dimensional position/attitude recognition apparatus 200, or in an external storage device or the like. In a case shown in FIG. 1, the threshold storage means 8 is provided in an external storage device or the like, so that it is appropriately used via communication, for example.

If the determination means 5 determines to change the relative positions and any of the first image capturing means 2, the second image capturing means 3, and the object 1 is moved, the first image capturing means 2 and/or the second image capturing means 3 re-capture images of the object 1 in the relative positional relationship obtained after the movement. Then, at least one of the first image and the second image captured before the movement is updated, and the newly captured images are, as the first image and the second image, given to the recognition means 7.

The recognition means 7 performs a matching process based on the captured first and second images or, in a case where the images are re-captured, based on the updated first and second images, and performs the three-dimensional position/attitude recognition process. A three-dimensional model can be used in the matching process. In a case where the object 1 is an industrial product, for example, CAD data thereof can be used as the three-dimensional model.

FIG. 2 is a diagram showing a hardware configuration of the three-dimensional position/attitude recognition apparatus according to the present invention. In FIG. 2, the first image capturing means 2 and the second image capturing means 3 of FIG. 1 correspond to a camera 102 and a camera 103, respectively, and each of them is provided in an industrial robot 300.

As shown in FIG. 2, in the industrial robot 300, the camera 102 and the camera 103 corresponding to the first image capturing means 2 and the second image capturing means 3 are attached to a right hand 12R provided at the distal end of a right arm 11R.

However, an aspect in which the first image capturing means 2 and the second image capturing means 3 are provided in such a robot is not limitative. For example, a camera may be fixed to a wall surface as long as the relative positions of the object 1 and the first and second image capturing means 2 and 3 are changeable. A left hand 12L is provided at the distal end of a left arm 11L, and thus the robot is structured with two arms. However, it is not always necessary to provide both of the arms, and only one of the arms may be provided. Additionally, both the cameras 102 and 103 may be provided to the right hand 12R as shown in FIG. 2, but instead they may be provided to the left hand 12L. Alternatively, each of the cameras may be provided to each of the hands.

The position where the camera is provided may not necessarily be the hand. However, in a case where the camera is moved, it is desirable to arbitrarily select a movable portion of the robot, such as a head portion 15 attached to a neck portion 14 that is movable. Here, in a case where the position where the object 1 itself is located is changed in order to change the position relative to the object 1, it is not necessary to attach the camera to a movable portion, and therefore the camera may be attached to a torso portion 13 or the like.

The detection means 4, the determination means 5, the movement means 6, and the recognition means 7 can be implemented by a computer 10. More specifically, a program that implements a function as the three-dimensional position/attitude recognition apparatus 200 is in advance installed in the computer 10.

The detection means 4 detects the edge direction of the object 1 (such as a component part) based on the first image and the second image captured by the camera 102 and the camera 103, and detects the parallel edge.

If the determination means 5 determines that it is necessary to change the relative positions, the movement means 6 operates the right arm 11R and the right hand 12R of the robot to move the cameras 102 and 103 such that an image of the object 1 can be re-captured from an appropriate position and an appropriate direction. The aspect in which the camera 102 and the camera 103 being attached to a hand portion is advantageous because the degree of freedom is high.

The threshold storage means 8 may also be implemented by the computer 10, but alternatively may be implemented by, for example, an external storage device as a database.

### <A-3. Operation>

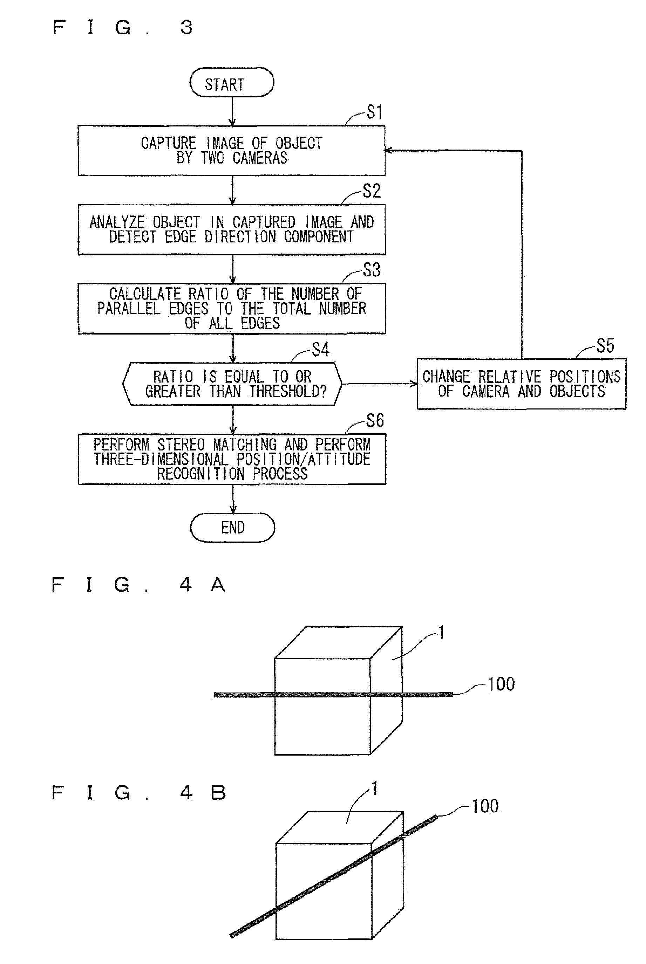

Next, a flow of an operation of the three-dimensional position/attitude recognition apparatus 200 according to the present invention will be described with FIG. 3.

As shown in FIG. 3, firstly, to capture images of the object 1, the right hand 12R with the camera 102 and the camera 103 attached thereto is moved, so that the object 1 is included in an image-capturable range of each of the camera 102 and the camera 103. Then, the camera 102 and the camera 103 capture images of the object 1 from different directions (step S1). The captured images are defined as the first image and the second image, respectively.

Next, the detection means 4 in the computer 10 detects an edge by analyzing an image element of the object 1 in at least one of the first image and the second image. Furthermore, the detection means 4 detects an edge direction component (step S2). For the detection of the edge and the edge direction, for example, calculation can be made by using a Sobel operator or the like.

Moreover, the detection means 4 detects, among the detected edge directions, a parallel edge that is in parallel with the disparity direction on the image, and calculates, for example, the ratio of the number of parallel edges to the total number of edges (step S3). At that time, as a criterion in determining a parallel edge, the parallel threshold stored in the threshold storage means 8 can be referred to. It may be also acceptable to calculate the ratio of the total length of parallel edges to the total length of all edges.

Next, the determination means 5 in the computer 10 determines whether or not the value calculated in step S3 is equal to or greater than the recognition threshold that has been set in advance (step S4). That is, the determination means 5 determines whether or not the degree of parallelism between the edge direction and the disparity direction 100 on the image is high. If the value is equal to or greater than the recognition threshold, that is, if it can be determined that the probability of failing in matching will increase, the process proceeds to step S5. If the value is less than the recognition threshold, the process proceeds to step S6.

In step S5, the movement means 6 in the computer 10 operates the right hand 12R with the camera 102 and the camera 103 attached thereto, to move the camera 102 and the camera 103. Here, in the present invention, it suffices that the relative positions of the camera 102, the camera 103, and the object 1 can be changed. Therefore, it is also possible that the movement means 6 moves the object 1 by using the left hand 12L, for example. However, in the following, the operation performed in a case where the camera 102 and the camera 103 are moved will be described in detail.

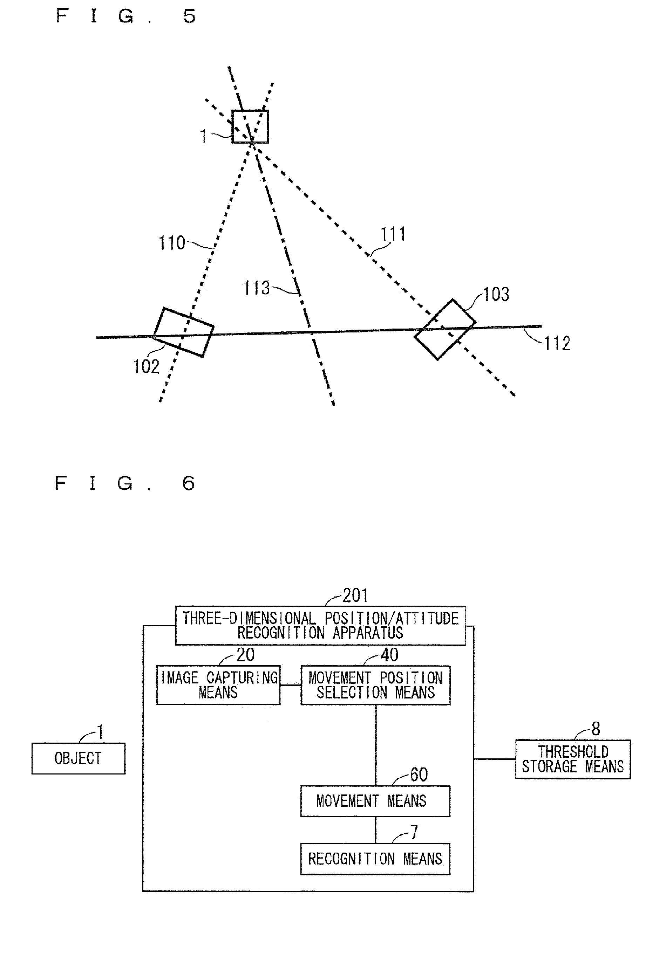

FIGS. 4 and 5 are diagrams for explaining the operation in step S5.

The first image and the second image in which it is determined in step S4 that the value is equal to or greater than the recognition threshold are, for example, an image as shown in FIG. 4(a). In FIG. 4(a), the object 1 and the disparity direction 100 on the image are shown. As shown in FIG. 4(a), an edge of the object 1 extending in the horizontal direction of FIG. 4(a) is in parallel with the disparity direction 100 on the image. It is not necessary that the edge and the disparity direction 100 on the image are absolutely in parallel with each other, but they may form an angle within such a range that the edge can be considered to be the above-described parallel edge.

Here, as shown in FIG. 5, in arranging the camera 102, the camera 103, and the object 1, an optical axis 110 of the camera 102, an optical axis 111 of the camera 103, and a disparity direction axis 112 passing through the positions where the two cameras are located, can be conceptually expressed.

Here, a measure to prevent the edge of the object 1 and the disparity direction 100 on the image in FIG. 4(a) from being in parallel with each other is to rotate the disparity direction 100 on the image, that is, to create a state shown in FIG. 4(b).

Reflecting this to FIG. 5, the disparity direction axis 112 is rotated so as to rotate the disparity direction 100 on the image, because the disparity direction 100 on the image is a direction along a component obtained by projecting the disparity direction axis 112 onto the image.

To be specific, at least one of the camera 102 and the camera 103 is moved in a direction including a direction component that is perpendicular to at least one of the optical axis 110 and the optical axis 111 and is also perpendicular to the disparity direction axis 112. In other words, at least one of the camera 102 and the camera 103 is moved in a direction including a direction component extending in the direction perpendicular to the drawing sheet. As long as that direction component is included, a manner of the movement may be a rotation movement for example, and a direction of the movement may be either of a surface direction and a back surface direction of the drawing sheet. The degree of movement may be such a degree that the edge considered to be the parallel edge can fall out of the angular range in which it is considered to be the parallel edge. Here, a consideration is necessary for preventing another edge from being considered to be the parallel edge as a result of the movement.

When an axis extending along the bisector of the angle formed between the optical axis 110 and the optical axis 111 is defined as a central optical axis 113, it may be acceptable to move the camera 102 and the camera 103 such that both of them can rotate around the central optical axis 113. Such a movement enables the disparity direction 100 on the image to be rotated while suppressing deviation of the object 1 from the image-capturable range of each of the camera 102 and the camera 103. It is particularly desirable that the central optical axis 113 passes through the center of gravity or the center of coordinates of the object 1.

Since it is necessary to change the relative positions of the object 1 and both cameras 102 and 103, the disparity direction 100 on the image may be rotated by rotating the object 1 without moving the camera 102 and the camera 103. For example, by rotating the object 1 around the central optical axis 113, the disparity direction 100 on the image can be rotated.

After the disparity direction 100 on the image is rotated in step S5, the process returns to step S1, and images of the object 1 are re-captured by using the camera 102 and the camera 103. The captured images are updated as the first image and the second image, respectively. Then, in step S2, an edge direction component is detected in the same manner, and in step S3 and step S4, whether or not the value exceeds the recognition threshold is determined. If the value does not exceed the recognition threshold, the process proceeds to step S6.

In step S6, stereo matching is performed by using the obtained first and second images, and the three-dimensional position/attitude recognition process is performed on the object 1. In a case where there are a plurality of objects 1, the same operation can be performed on each of the objects 1.

### <A-4. Effects>

In the first embodiment according to the present invention, the three-dimensional position/attitude recognition apparatus includes: the detection means 4 for detecting the edge direction of the object 1 by analyzing the image element of the object 1 in at least one of the captured first and second images; the determination means 5 for determining, based on a result of the detection, whether or not to change the relative positions of the object 1 and at least one of the first image capturing means 2 and the second image capturing means 3; and the movement means 6 for moving at least one of the first image capturing means 2 and the second image capturing means 3 relative to the object 1. Thereby, in accordance with the detected edge direction of the object 1, the first image capturing means 2 and the second image capturing means 3 are arranged in appropriate positions, and left and right images suitable for matching are obtained. Therefore, by analyzing the edge portion, the three-dimensional position/attitude recognition on the object 1 can be efficiently performed.

In the first embodiment according to the present invention, in the three-dimensional position/attitude recognition apparatus, the determination means 5 determines whether or not to change the relative positions of the object 1 and at least one of the first image capturing means 2 and the second image capturing means 3, based on the degree of parallelism between the detected edge direction and the disparity direction 100 on the image. This can suppress detection of an edge that is considered to be the parallel edge. Thus, the three-dimensional position/attitude recognition process can be performed by using an edge that is not considered to be in parallel with the disparity direction 100 on the image. Therefore, the efficiency of the three-dimensional position/attitude recognition is improved.

In the first embodiment according to the present invention, in the three-dimensional position/attitude recognition apparatus, the movement means 6 moves at least one of the first image capturing means 2 and the second image capturing means 3 in a direction including a direction component that is perpendicular to at least one of the optical axis 110 and the optical axis 111 of the first image capturing means 2 and the second image capturing means 3, respectively, and is also perpendicular to the disparity direction axis 112. Thereby, the disparity direction 100 on the image that is the component obtained by projecting the disparity direction axis 112 can be rotated on the first image and the second image, and the parallel edge on the image can be changed into an edge that is not considered to be parallel. Thus, in the stereo matching, misrecognized corresponding points on the parallel edge can be appropriated recognized.

### <B. Second Embodiment>

### <B-1. Configuration>

FIG. 6 is a block diagram showing a configuration of a three-dimensional position/attitude recognition apparatus according to the present invention. In the configuration, the same parts as those of the embodiment 1 are denoted by the same corresponding reference numerals, and a redundant description is omitted.

As shown in FIG. 6, a three-dimensional position/attitude recognition apparatus 201 includes single image capturing means 20 for capturing an image of the object 1, and movement position selection means 40 for obtaining a first image captured by the image capturing means 20 and selecting an intended movement position of the image capturing means 20.

Furthermore, the three-dimensional position/attitude recognition apparatus 201 includes movement means 60 for moving the image capturing means 20 to the intended movement position selected by the movement position selection means 40, and recognition means 7 for performing a three-dimensional position/attitude recognition process on the object 1 based on the first image and a second image.

After being moved, the image capturing means 20 re-captures an image of the object 1 from a different direction. The captured image is defined as the second image. In other words, the second embodiment is not a parallel image capturing method in which image capturing means are arranged at two positions (first and second positions different from each other) to substantially simultaneously capture images as in the first embodiment, but is a time-lag image capturing method in which the single image capturing means 20 is moved between the first position and the second position so that images of the same object are captured at different time points. In a case where the object of the image capturing is stationary, correspondence between the first image and the second image can be made even in such time-lag image capturing. Therefore, it is quite possible to perform the three-dimensional position/attitude recognition process on the object 1.

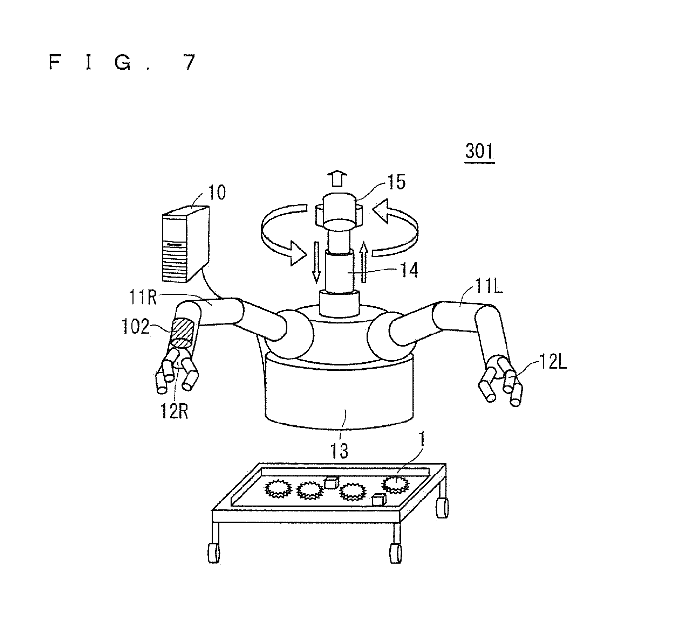

FIG. 7 is a diagram showing a hardware configuration of the three-dimensional position/attitude recognition apparatus 201 according to the present invention. In a case shown in FIG. 7, the camera 102 corresponding to the image capturing means 20 of FIG. 6 is provided in an industrial robot 301. However, an aspect in which the image capturing means 20 is provided in such a robot is not limitative. Any configuration is acceptable as long as the position where the image capturing means 20 is located is changeable.

As shown in FIG. 7, in the industrial robot 301, the camera 102 corresponding to the image capturing means 20 is attached to the right hand 12R provided at the distal end of the right arm 11R.

Although the left hand 12L is provided at the distal end of the left arm 11L, it is not always necessary to provide both of the arms, and only one of the arms may be provided. Additionally, the camera 102 may be provided to the left hand 12L.

The movement position selection means 40, the movement means 60, and the recognition means 7 can be implemented by the computer 10. More specifically, a program that implements a function as the three-dimensional position/attitude recognition apparatus 201 is in advance installed in the computer 10.

The movement position selection means 40 detects the edge direction of the object 1 (such as a component part) based on the first image captured by the camera 102, and selects the intended movement position to which the camera 102 is to be moved.

The movement means 60 operates the right arm 11R and the right hand 12R of the robot, to move the camera 102 to the intended movement position.

### <B-2. Operation>

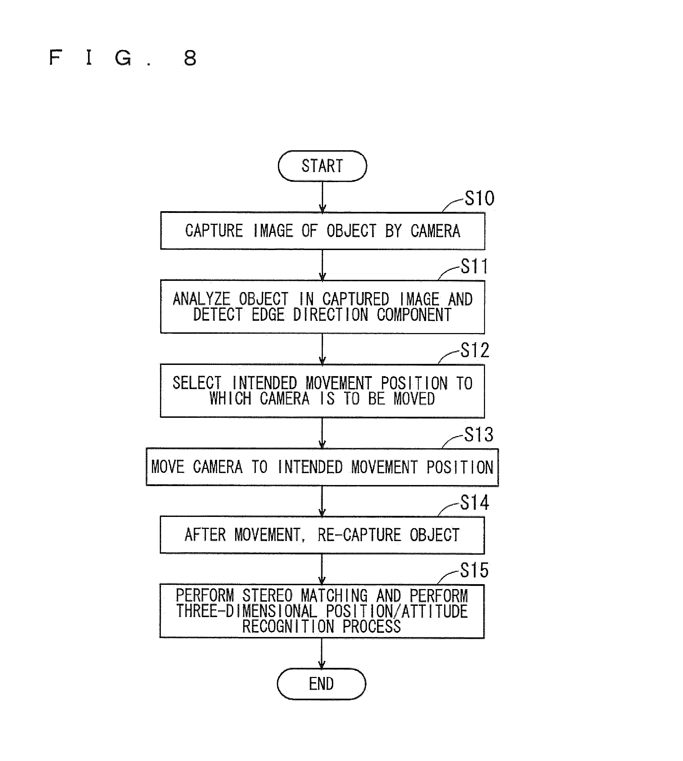

Next, a flow of an operation of the three-dimensional position/attitude recognition apparatus 201 according to the present invention will be described with FIG. 8.

As shown in FIG. 8, firstly, in order to capture an image of the object 1, the right hand 12R with the camera 102 attached thereto is operated, to include the object 1 within the image-capturable range of the camera 102. Then, an image of the object 1 is captured (step S10). The captured image is defined as the first image.

Then, the movement position selection means 40 in the computer 10 detects an edge by analyzing the object 1 in the first image. Furthermore, the movement position selection means 40 detects an edge direction component (step S11). For the detection of the edge and the edge direction, for example, calculation can be made by using a Sobel operator or the like.

Then, the movement position selection means 40 selects the intended movement position to which the camera 102 is to be moved (step S12). Firstly, an intended movement position to which the camera 102 is to be moved is temporarily set, and an axis passing through the intended movement position and the position where the camera 102 is currently located is defined as an intended disparity direction axis. Furthermore, a direction extending along a component obtained by projecting the intended disparity direction axis onto the first image is defined as an intended disparity direction on the image. Then, an intended parallel edge that is considered to be in parallel with the intended disparity direction on the image is detected with reference to the parallel threshold in the threshold storage means 8.

Then, whether or not the intended parallel edge is equal to or greater than the recognition threshold in the threshold storage means 8 is evaluated. That is, whether or not the degree of parallelism between the edge direction and the intended disparity direction on the image is high is evaluated. If the intended parallel edge is equal to or greater than the recognition threshold, the intended movement position that has been temporarily set is changed, and the evaluation is performed in the same manner. This evaluation is repeated until the intended parallel edge becomes less than the recognition threshold. When the intended movement position at which the intended parallel edge becomes less than the recognition threshold is found, that position is selected as the intended movement position of the camera 102.

Then, the movement means 6 in the computer 10 operates the right hand 12R with the camera 102 attached thereto, to move the camera 102 to that intended movement position (step S13).

Then, an image of the object 1 is re-captured by using the moved camera 102. The captured image is defined as the second image. The second image is an image captured from a direction different from the direction for the first image (step S14).

Then, stereo matching is performed by using the obtained first and second images, and the three-dimensional position/attitude recognition process is performed on the object 1 (step S15). In a case where there are a plurality of objects 1, the same operation can be performed on each of the objects 1.

### <B-3. Effects>

In the second embodiment according to the present invention, the three-dimensional position/attitude recognition apparatus includes: the movement position selection means 40 for detecting the edge direction of the object 1 by analyzing the image element of the object 1 in the captured first image, and selecting the intended movement position to which the image capturing means 20 is to be moved; and the movement means 60 for moving the image capturing means 20 to the intended movement position. After being moved by the movement means 60, the image capturing means 20 re-captures an image of the object 1 as the second image. Thereby, even with one image capturing means, the position where the image capturing means 20 is located at the time of capturing the second image can be selected in accordance with the detected edge direction of the object 1, and left and right images suitable for matching can be obtained. Therefore, by analyzing the edge portion, the three-dimensional position/attitude recognition on the object 1 can be efficiently performed.

In the second embodiment according to the present invention, in the three-dimensional position/attitude recognition apparatus, the movement position selection means 40 selects the intended movement position to which the image capturing means 20 is moved, based on the degree of parallelism between the detected edge direction and the intended disparity direction on the image. This can suppress detection of the parallel edge after the movement, and the three-dimensional position/attitude recognition process can be performed by using an edge that is not considered to be in parallel with the disparity direction 100 on the image. Therefore, the efficiency of the three-dimensional position/attitude recognition is improved.

### <C. Modification>

In a case where, in the first embodiment, only one (for example, the first image capturing means 2) of the two image capturing means (the first image capturing means 2 and the second image capturing means 3) is moved to re-capture an image, an image obtained by re-capturing by the second image capturing means 3 that is not moved is substantially the same as the image originally obtained by the second image capturing means 3, or merely a rotation in the frame of this image is added.

Therefore, in such a case, it may be possible that the unmoved image capturing means does not recapture an image, but the image originally captured by this image capturing means is used for the three-dimensional position/attitude recognition. The same applies to the second embodiment, too. Therefore, it suffices that re-capturing of an image is performed by using at least one of the two image capturing means (at least one of the two cameras).

While the invention has been described in detail, the foregoing description is in all aspects illustrative and not restrictive. It will be appreciated that numerous modifications unillustrated herein can be made without departing from the scope of the present invention.

### DESCRIPTION OF THE REFERENCE NUMERALS

- 1: object
- 2: first image capturing means
- 3: second image capturing means
- 4: detection means
- 5: determination means
- 6, 60: movement means
- 7: recognition means
- 8: threshold storage means
- 10: computer
- 11L: left arm
- 11R: right arm
- 12L: left hand
- 12R: right hand
- 13: torso portion
- 14: neck portion
- 15: head portion
- 20: image capturing means
- 40: movement position selection means
- 100: disparity direction
- 102, 103: camera
- 110, 111: optical axis
- 112: disparity direction axis
- 113: central optical axis
- 200, 201: three-dimensional position/attitude recognition apparatus
- 300, 301: industrial robot

## Claims

1. A three-dimensional position/attitude recognition apparatus comprising:
first and second image capturing means (2, 3) for capturing images of an object (1);
detection means (4) for detecting an edge direction of said object (1) by analyzing an image element of said object (1) in at least one of a first image captured by said first image capturing means (2) and a second image captured by said second image capturing means (3);
determination means (5) for determining whether or not to change relative positions of said object (1) and at least one of said first and second image capturing means (2, 3), based on a result of the detection by said detection means (4); and
movement means (6) for, in a case where said determination means (5) determines to change said relative positions, moving at least one of said first and second image capturing means (2, 3) relative to said object (1),
wherein
in a case where said relative movement is performed, said first and second image capturing means (2, 3) re-capture images of said object (1), and update at least one of said first and second images,
said three-dimensional position/attitude recognition apparatus further comprises recognition means (7) for performing a three-dimensional position/attitude recognition process on said object (1) based on said first and second images.

2. The three-dimensional position/attitude recognition apparatus according to claim 1, wherein
a direction extending along a component obtained by projecting a disparity direction axis (112) onto said first or second image is defined as a disparity direction (100) on the image, said disparity direction axis (112) passing through a position where said first image capturing means (2) is located and a position where said second image capturing means (3) is located,
said determination means (5) determines whether or not to change said relative positions of said object (1) and at least one of said first and second image capturing means (2, 3), based on the degree of parallelism between said detected edge direction and said disparity direction (100) on the image.

3. The three-dimensional position/attitude recognition apparatus according to claim 2, wherein
in a case where the ratio of the number of the edges considered to be in parallel with said disparity direction (100) on the image to the total number of edges is equal to or greater than a threshold,
said determination means (5) determines to change said relative positions of said object (1) and at least one of said first and second image capturing means (2, 3).

4. The three-dimensional position/attitude recognition apparatus according to claim 2 or 3, wherein
in a case where the ratio of the total length of the edges considered, based on a predetermined criterion, to be in parallel with said disparity direction (100) on the image to the total length of all edges is equal to or greater than a threshold,
said determination means (5) determines to change said relative positions of said object (1) and at least one of said first and second image capturing means (2, 3).

5. The three-dimensional position/attitude recognition apparatus according to claim 2 or 3, wherein
said movement means (6) moves at least one of said first and second image capturing means (2, 3) in a direction including a direction component that is perpendicular to at least one of optical axes (110, 111) of said first and second image capturing means (2, 3) and is also perpendicular to said disparity direction axis (112).

6. The three-dimensional position/attitude recognition apparatus according to claim 5, wherein
said movement means (6) rotatably moves both of said first and second image capturing means (2, 3) around a central optical axis (113) extending along a bisector of an angle formed between said optical axes (110, 111) of said first and second image capturing means (2, 3).

7. The three-dimensional position/attitude recognition apparatus according to claim 2 or 3, wherein
said movement means (6) rotatably moves said object (1) around a central optical axis (113) extending along a bisector of an angle formed between optical axes (110, 111) of said first and second image capturing means (2, 3).

8. A three-dimensional position/attitude recognition apparatus comprising:
image capturing means (20) for capturing an image of an object (1);
movement position selection means (40) for detecting an edge direction of said object (1) by analyzing an image element of said object (1) in a first image captured by said image capturing means (20), and selecting an intended movement position to which said image capturing means (20) is to be moved; and
movement means (60) for moving said image capturing means (20) to said intended movement position,
wherein
after the movement made by said movement means (60), said image capturing means (20) re-captures an image of said object (1) as a second image,
said three-dimensional position/attitude recognition apparatus further comprises recognition means (7) for performing a three-dimensional position/attitude recognition process on said object (1) based on said first and second images.

9. The three-dimensional position/attitude recognition apparatus according to claim 8, wherein
a direction extending along a component obtained by projecting an intended disparity direction axis onto said first image is defined as an intended disparity direction on the image, said intended disparity direction axis passing through a position where said image capturing means (20) is located before the movement and a position where said image capturing means (20) is located after the movement,
said movement position selection means (40) selects an intended movement position to which said image capturing means (20) is to be moved, based on the degree of parallelism between said detected edge direction and said intended disparity direction on the image.

10. The three-dimensional position/attitude recognition apparatus according to claim 9, wherein
said movement position selection means (40) selects, as said intended movement position to which said image capturing means (20) is to be moved, such a position that the ratio of the number of said edges considered to be in parallel with said intended disparity direction on the image to the total number of edges is less than a threshold.

11. The three-dimensional position/attitude recognition apparatus according to claim 9 or 10, wherein
said movement position selection means (40) selects, as said intended movement position to which said image capturing means (20) is to be moved, such a position that the ratio of the total length of said edges considered to be in parallel with said intended disparity direction on the image to the total length of all edges is less than a threshold.

12. The three-dimensional position/attitude recognition apparatus according to any one of claims 1 to 3, wherein
said recognition means (7) performs stereo matching based on the edges of said object (1) in said first and second images, and performs a three-dimensional position/attitude recognition process on said object (1).

13. The three-dimensional position/attitude recognition apparatus according to any one of claims 8 to 10, wherein
said recognition means (7) performs stereo matching based on the edges of said object (1) in said first and second images, and performs a three-dimensional position/attitude recognition process on said object (1).

14. A three-dimensional position/attitude recognition method comprising the steps of:
(a) capturing images of an object (1) from a first position and a second position different from each other;
(b) detecting an edge direction of said object (1) by analyzing an image element of said object (1) in at least one of a first image captured at said first position and a second image captured at said second position;
(c) determining whether or not to change relative positions of said object (1) and at least one of said first and second positions, based on a result of the detection in said step (b);
(d) in a case where a result of the determination in said step (c) is that said relative positions need to be moved, moving said relative positions;
(e) in a case where said relative positions are moved, re-capturing images of said object from said first and said second positions obtained after the movement of said relative positions, and updating at least one of said first and second images; and
(f) performing a three-dimensional position/attitude recognition process on said object (1) based on said first and second images.

15. The three-dimensional position/attitude recognition method according to claim 14, wherein
a direction extending along a component obtained by projecting a disparity direction axis (112) onto said first or second image is defined as a disparity direction (100) on the image, said disparity direction axis (112) passing through said first position and said second position,
said step (c) is a step of determining whether or not to change said relative positions based on the degree of parallelism between said detected edge direction and said disparity direction (100) on the image.

16. The three-dimensional position/attitude recognition method according to claim 14 or 15, wherein
the capturing of the images at said first and second positions is performed by first and second image capturing means (2, 3), respectively.

17. The three-dimensional position/attitude recognition method according to claim 14 or 15, wherein
the capturing of the images at said first and second positions is time-lag image capturing that is performed by moving single image capturing means (20).

18. A three-dimensional position/attitude recognition program installed in a computer and, when executed, causing said computer to function as the three-dimensional position/attitude recognition apparatus according to any one of claims 1 to 13.
